# EUROPÄISCHE PATENTANMELDUNG

(11) **EP 0 870 429 A2**
(43) Veröffentlichungstag der Anmeldung: **14.10.1998**
(21) Anmeldenummer: 98104554.5
(22) Anmeldetag: 13.03.1998
(51) Int. Cl.: A01K 11/00

(54) **Elektronisch identifizierbare Ohrmarke**

(30) Priorität: 08.04.1997 DE 19715473
(71) Anmelder: Diehl Ident GmbH, 90478 Nürnberg (DE)
(72) Erfinder: Ruppert, Helmut, 47906 Kempen (DE)
(74) Vertreter: Hofmann, Gerhard, Dipl.-Ing. Patentassessor

(57) **Zusammenfassung**

Ein infolge zweier gegeneinander versetzter Biegezonen (13.15, 13.16) dreigliedriger Streifen (12) wird zur klammerförmig anlegbaren Transponder-Ohrmarke (11) insbesondere für Schlachtvieh, wenn ein äußerer Schenkel (15) unter Zwischenlage eines Transponders (18) auf das Mittelteil (14) geklappt und dort verrastet wird. Die gegenüberliegende Biegezone (13.16) umgreift dann den Rand des Außenohr-Lappens, wenn der Mittel-Schenkel (14) und der Befestigungs-Schenkel (16) V-förmig auf das Ohr geschoben und mittels eines Raststiftes (25) durch das Ohr und durch miteinander fluchende Stecklöcher (27) an den freien Schenkelenden hindurch aneinander festgelegt werden. Zur Entnahme des Transponders (18) in der Schlachtbank braucht nur der außenliegende Verschluß-Schenkel (15) wieder vom Mittel-Schenkel (14) und vom Raststift (25) abgehoben zu werden, ohne die Marke (11) insgesamt vom Ohr entfernen zu müssen.

## Beschreibung

Die Erfindung betrifft eine Ohrmarke für Tiere gemäß dem Oberbegriff des Anspruches 1.

Eine derartige Ohrmarke ist aus der EP-A-0 219 186 bekannt. Sie besteht im wesentlichen aus einem dreischenkligen Kunststoffteil, dessen Schenkel sternförmig zusammenstoßen und von denen zwei Schenkel unter Einschluß eines Transponders flach aufeinanderliegend miteinander verschweißt werden, während der dritte Schenkel ein Steckloch zur Aufnahme eines widerhakenförmig verriegelnden Raststiftes aufweist, der zuvor durch den Außenohrlappen des Tieres hindurchgesteckt wurde. Daraus resultiert, daß der den Transponder beinhaltende Teil der Ohrmarke relativ weit von der Befestigungsstelle am Ohr frei herunterhängt und deshalb von anderen Tieren leicht abgebissen werden oder sich im Gesträuch verfangen kann, daß jedenfalls eine erhebliche Verlust-Gefahr besteht. Da der Transponder eingeschweißt ist, kann er erst nach Lösen der Ohrmarke vom Ohr und auch dann nur unter erheblichem Aufwand wieder aus der Ohrmarke herausgetrennt werden, um ihn erneut zu benutzen. Eine solche Mehrfach-Verwendung ist insbesondere bei jungem Schlachtvieh anzustreben, dessen Lebensalter nur wenige Monate erreicht, um in der nächsten Aufzuchtsaison die rückgewonnenen Transponder nach zentraler Registrierung ihrer Identnummern erneut an Züchter ausgeben zu können. Auch das zuverlässige Einschweißen der wiederzuverwendenden Transponder zwischen die Schenkel von neuen Ohrmarken kann nicht ohne weiteres vor Ort (also im Zuchtbetrieb) durchgeführt werden. Eine Wiederverwendung der einem Tier vor oder nach dem Schlachten komplett abgenommenen, noch transponderbestückten Ohrmarke selbst ist aus hygienischen Gründen nicht statthaft.

In Erkenntnis dieser Gegebenheiten liegt der Erfindung die Aufgabe zugrunde, eine Ohrmarke gattungsgemäßer Art zu schaffen, die zuverlässiger am Ohrlappen eines Tieres befestigbar ist und aus welcher der Transponder trotz hoher Verlustsicherheit problemlos zu einfacher anderweitiger Wiederverwendung rückgewonnen werden kann.

Diese Aufgabe ist erfindungsgemäß im wesentlichen dadurch gelöst, daß die gattungsgemäße Ohrmarke auch nach dem Kennzeichnungsteil des Hauptanspruches ausgelegt ist.

Gemäß jener Lösung wird eine an sich im wesentlichen als dreigliedriger Kunststoff-Streifen aufgebaute Ohrmarke nach Einschlagen eines freien Schenkels als verbleibende zweischenklige Klammer nach Art einer herkömmlichen Metallklammer unmittelbar um den Rand des Ohrlappens des zu markierenden Tieres herumgelegt. Zuvor wurde dafür ein äußerer Schenkel mit dem mittleren Schenkel unter Einschluß des Transponders zusammengeklappt und kraftschlüssig oder formschlüssig und jedenfalls reversibel (im Sinne einer Wieder-Öffnungsmöglichkeit) verbunden. Der Transponder kann daraus - ohne Entfernung der Ohrmarke selbst - nach Aufklappen des dritten (nicht unmittelbar als Ohrklammer wirkenden) Schenkels wieder entnommen werden.

Zusätzliche Alternativen und Weiterbildungen sowie weitere Merkmale und Vorteile der Erfindung ergeben sich aus den weiteren Ansprüchen und, auch unter Berücksichtigung der Darlegungen in der abschließenden Kurzfassung, aus nachstehender Beschreibung eines in der Zeichnung unter Beschränkung auf das Wesentliche etwas abstrahiert aber angenähert maßstabsgerecht skizzierten bevorzugten Realisierungsbeispiels zur erfindungsgemäßen Lösung.

In der Zeichnung zeigt:
- Fig. 1: eine erfindungsgemäß ausgelegte dreigliedrige Ohrmarke, mit zwischen zweien ihrer Schenkel eingelegtem Stabtransponder, aufgeklappt in Draufsicht, und
- Fig. 2: eine ebenfalls erfindungsgemäß ausgelegte dreigliedrige Ohrmarke, aber nun mit Scheibentransponder, aufgeklappt in schräger Ansicht.

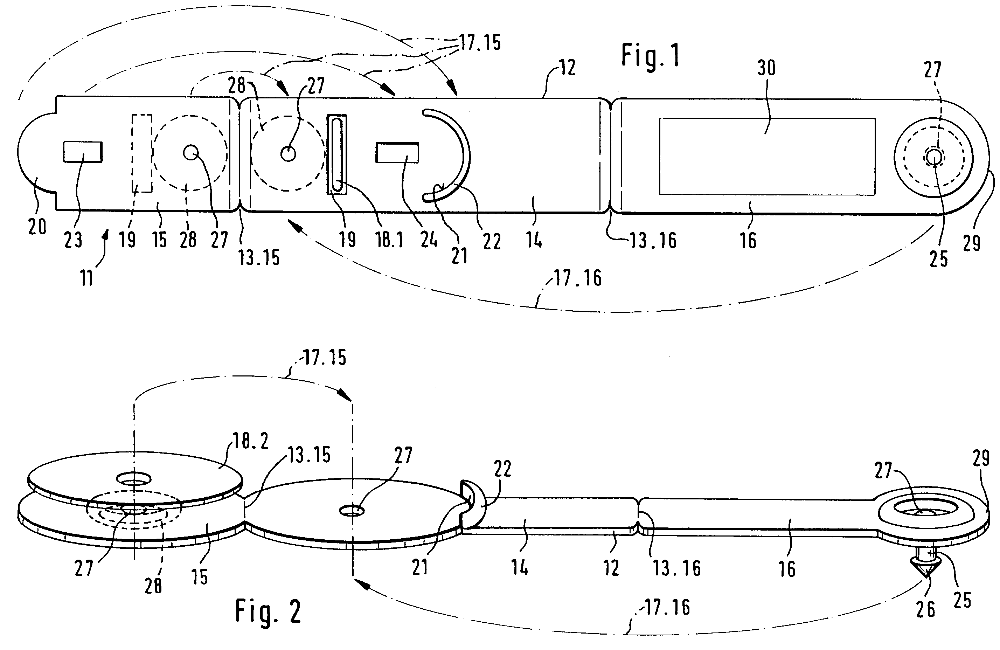

Die in der Zeichnung in aufgeklappter Stellung dargestellte dreigliedrige Ohrmarke 11 besteht im wesentlichen aus einem länglichen Kunststoff-Streifen 12 mit zwei durch Materialschwächung definierten Soll-Biegestellen 13 zur Abgrenzung eines Mittel-Schenkels 14 zwischen einem Verschluß-Schenkel 15 und einem Befestigungs-Schenkel 16. Der Mittel-Schenkel 14 ist länger als der Verschluß-Schenkel 15 und etwa gleich lang wie der Befestigungs-Schenkel 16. Infolge der Verschluß-Klappbewegung 17.15 erfolgt ein Knickvorgang um die quer zur Längserstreckung des Streifens 12 orientierte Achse der Biegestelle 13.15, um einen Transponder 18 zwischen diesen beiden Schenkeln 14-15 einzuschließen. Im Ausführungsbeispiel der Fig. 1 handelt es sich um einen Stab-Transponder 18.1, bei dem ein Ferritstab als Träger der magnetischen Antennenspule und des an sie angeschlossenen Ident-Chips in eine gestreckte Kapsel etwa aus Glas eingefaßt ist, wie beispielsweise in der EP-PS 0 531 426 für ein Herstellungsbeispiel näher beschrieben. Zur Lagefixierung des Stab-Transponders 18.1 in der Ohrmarke 11, der zur Vermeidung einer zu großen Längserstreckung der Schenkel 14, 15 vorzugsweise quer zur Längserstreckung des Streifens 12 orientiert ist, kann in wenigstens eine der in zusammengeklapptem Zustand aufeinander zu weisenden Oberflächen der Schenkel 14 oder 15 eine entsprechend dimensionierte gestreckte Vertiefung 19 vorgesehen, also eingeformt oder eingearbeitet sein.

Für eine wieder öffnenbare Verrastung des mit dem Mittel-Schenkel 14 zusammengefalteten Verschluß-Schenkels 15 weist dieser stirnseitig eine Profilierung in Form eines Haltebogens 20 auf, dessen Formgebung an die Innenkontur 21 einer hufeisenförmig gebogenen Rippe 22 angepaßt ist, die sich aus der Ebene des Mittel-Schenkels 14 in Richtung der Öffnung der Transponder-Vertiefung 19 erhebt. Nach Klappen um die Biegestelle 13.15 wird dadurch der Verschluß-Schenkel 15 auf dem Mittel-Schenkel 14 fixiert, indem der stirnseitige Haltebogen 20 radial kraftschlüssig in die Innenkontur 21 der Rippe 22 eingreift und ggf. darin auch noch durch Hinterschneidungen formschlüssig einrastend gehalten wird. Gegen eine Längsverschiebung der Schenkel 14-15 gegeneinander, die zu einem Lösen des Halte-Bogens 20 führen könnte, also für sicheren Eingriff in die Rippen-Innenkontur 21, wird ein Auswandern des Haltebogens 20 relativ zur Rippe 22 in Längsrichtung des Streifens 12 dadurch verhindert, daß im zusammengeklappten Zustand ein Vorsprung quer zur Oberfläche des Streifens 12 in eine Haltevertiefung 24 am benachbarten Schenkel (14 resp. 15) eingreift.

Eine zusätzliche Fixierung der unter Einschluß des Transponders 18 zusammengeklappten Schenkel 15-14 dem Halte-Vorsprung 23 gegenüber erfolgt durch einen Raststift 25, der mit seiner widerhakenförmigen Spitze 26 (vgl. Fig. 2) zwei bei zusammengeklappten Schenkeln 14-15 miteinander axial fluchtend aufeinanderliegende Stecklöcher 27 durchgreift und förmschlussig hintergreift. Das bezüglich des Eingriffes des Raststiftes 25 gegenüberliegende, also austrittseitige Loch 27 ist außen von einer wulst- oder haubenförmigen Erhebung 28 umgeben, damit die Raststift-Spitze 26 nicht ungeschützt ins Freie ragt, wo sie Ursache mechanischer Störungen oder körperlicher Verletzungen werden könnte.

Wenn andererseits der Befestigungsschenkel 16 um seine Biegestelle 13.16 herum unter Einschluß des Ohrlappens noch über den - schon über dem Mittel-Schenkel 14 liegenden und mit diesem verrasteten - Verschluß-Schenkel 15 gelegt wird, um dann den Stift 25 durch die fluchtenden Löcher 27 zu stecken, ergibt sich dadurch eine zusätzliche Abdeckung für den sichereren Einschluß des Transponders 18 in die Ohrmarke 11, wenngleich dadurch die Wieder-Entnahme erschwert ist, wie zunächst der Deckschenkel 16 abgehoben oder abgeschnitten werden muß.

Denn wenn diese Ohrmarken 11 etwa bei jungem Schlachtvieh angewandt werden, das nur wenige Monate lang damit auszustatten ist, dann ist es wie eingangs erwähnt zweckmäßig, die Transponder 18 wieder rückzugewinnen, um sie für die nächste Aufzuchtgeneration (unter Aktualisierung der zugeordneten Datenbank-Informationen) erneut an Schlachtvieh-Produzenten auszugeben. Insofern wäre es unzweckmäßig, den Lappen des Tier-Ohres, dessen Rand an der Biegestelle 13.16 der Ohrmarke 11 umgriffen und vom Rast-Stift 25 hintergriffen wird, zwischen dem Verschluß-Schenkel 15 und dem Belestigungs-Schenkel 16 einzufassen. Für solchen Anwendungsfall ist es deshalb zweckmäßiger, gemäß der in Fig. 1 angedeuteten Klappbewegung 17.16 den Ohrlappen des mit dieser Marke 11 zu kennzeichnenden Tieres unmittelbar zwischen dem Befestigungsschenkel 16 und dem Mittel-Schenkel 14, also dem verrasteten Verschluß-Schenkel 15 gegenüber, einzufassen. Dann kann der Transponder 18 wiedergewonnen werden, indem vor oder nach dem Schlachtvorgang - jedenfalls nach der abschließenden Identifizierung des zu schlachtenden Tieres - einfach der Verschluß zwischen Haltebogen 20 und Bogenrippe 22 aufgerissen oder aufgebrochen und der Stab-Transponder 18.1 aus seiner nun freigegebenen Vertiefung 19 in einen Sammelbehälter oder einfach in die hohle Hand herausgeschüttelt wird. In keinem Falle muß für die Rückgewinnung des Transponders 18.1 die ohnehin nicht wiederverwendbare Ohrmarke 11 selbst vom Tier ganz wieder entfernt werden.

Aus physikalischen Gründen ist die Reichweite des passiven Stabtransponders nicht sehr groß. Um die Ohrmarke 11 auch aus größerer Distanz mittels eines Hochfrequenz-Lesegerätes abfragen zu können, wird zweckmäßigerweise statt des Stabtransponders 18.1 ein Scheibentransponder 18.2 eingesetzt. Der besteht aus einer kernlosen Antennen-Flachspule mit unmittelbar angeschlossenem Ident-Chip, eingegossen in eine flache ringförmige Umhüllung aus Kunststoff. Dieser Scheiben-Transponder 18.2 liegt nun - anstelle des in eine Vertiefung 19 (Fig.1) eingefaßten Stab-Transponders 18.1 - koaxial zu den Stecklöchern 27 für den Raststift 25 flach zwischen den Mittel- und Verschluß-Schenkeln 14/15, wo er bei Anlegen der Marke 11 ans Ohr gegen seitliches Herausgleiten durch den Stift 25 gehalten wird. Die Verrastung erfolgt also hinter dem engen Steckloch 27 im Kunststoffschenkel 15, nicht im größeren Durchgangsloch des Scheibentransponders 18.2.

Der Raststift 25 kann im Bereiche des freien Stirnendes 29 des Befestigungs-Schenkels 16 fest mit diesen verbunden, etwa daran ausgeformt oder darin festgelegt sein; oder der Raststift 25 ist als separater Druckknopf beigestellt, der erst beim Anlegen der Ohrmarke 11 an das Ohr des zu identifizierenden Tieres durch die Stecklöcher 27 (und den Ohrlappen selbst) bis zum hintergreifenden Rastsitz hindurchgeschoben wird. In letzterem Falle kann beim Anlegen der Ohrmarke 11 durch die Einsteck-Richtung des Raststifles 25 entschieden werden, ob der Verschluß-Schenkel 15 unter dem Ohrlappen abgedeckt oder von außen frei zugänglich sein soll. Letzteres ist für das Wiedergewinnen des Transponders 18.2 zweckmäßiger, weil dann nur die Rastspitze 26 des Stiftes 25 abgehobelt werden muß, um die Ohrmarke 11 wider aufklappen zu können.

Zur flächigen Auflage des Scheiben-Transponders 18.2 sind die ihn einschließenden Mittel- und Verschluß-Schenkel 14/15 entsprechend seitlich, quer zu ihrer Längserstreckung erweitert. Da diametral einander gegenüberliegende Bereiche der Peripherie des Scheiben-Transponders 18.2 im eingeschlossenen Zustand radial zwischen der Biegestelle 13.15 und der Rippen-Innenkontur 21 eingefaßt sind, kann bei der Scheibentransponder-Ohrmarke 11 (gemäß Fig. 2) auf eine Schenkel-Verlängerung zur Ausbildung eines Halterungsvorsprunges (entsprechend 23 in Fig. 1) verzichtet werden.

In Fig. 1 ist berücksichtigt, daß es zweckmäßig sein kann, auf der außenliegenden Oberfläche des Befestigungs-Schenkels 16 eine Markierzone zum Aufbringen von optisch ablesbarer kodierter oder von Klarschrift-Information vorzusehen.

Jedenfalls wird nach vorliegender Erfindung also ein - infolge zweier gegeneinander versetzter Biegezonen 13.15, 13.16 dreigliedriger - Kunststoff-Streifen 12 zur klammerförmig anlegbaren Transponder-Ohrmarke 11 insbesondere für Schlachtvieh, wenn ein äußerer Verschluß-Schenkel 15 unter Zwischenlage eines Transponders 18 auf das Mittelteil 14 geklappt und dort verrastet wird. Die gegenüberliegende Biegezone 13.16 umgreift dann den Rand des Außenohr-Lappens, wenn der Mittel-Schenkel 14 und der Befestigungs-Schenkel 16 V-förmig auf das Ohr geschoben und mittels eines Raststifles 25 durch das Ohr und durch miteinander fluchende Stecklöcher 27 an den freien Schenkelenden hindurch aneinander festgelegt werden. Zur Entnahme des Transponders 18 in der Schlachtbank braucht nur der außenliegende Verschluß-Schenkel 15 wieder vom Mittel-Schenkel 14 und vom Raststift 25 abgehoben zu werden, ohne die unter Umständen schon eingewachsene Marke 11 insgesamt wieder vom Ohr entfernen zu müssen.

## Patentansprüche

1. Elektronisch identifizierbare Ohrmarke (11), insbesondere für Schlachtvieh, mit zwei unter Einschluß eines passiven Hochfrequenz-Transponders (18) zusammenklappbaren Kunststoff-Schenkeln (14-15),
**dadurch gekennzeichnet**,
daß die Schenkel (14, 15) beiderseits einer gemeinsamen Biegezone (13.15) das äußere (Verschluß-Schenkel 15) und das mittlere Glied (Mittel-Schenkel 14) eines dreigliedrigen Streifens (12) sind, der stirnseitig, der Biegezone (13.15) gegenüber, mit einem Haltebogen (20) berandet ist, welcher der Innenkontur (21) einer Halterungs-Rippe (22) geometrisch angepaßt ist, die auf dem Mittel-Schenkel (14) vorgesehen ist, an den sich - dem Verschluß-Schenkel (15) gegenüber - über eine weitere Biegezone (13.16) ein Befestigungs-Schenkel (16) anschließt.

2. Ohrmarke nach Anspruch 1,
**dadurch gekennzeichnet**,
daß der Befestigungs-Schenkel (16) mit den unter Einschluß des Transponders (18) zusammengeklappten Mittel- und Verschluß-Schenkeln (14-15) mittels eines Raststiftes (25) unter Zwischenlage des Ohres des zu identifizierenden Tieres verbindbar ist, der miteinander fluchtende Stecklöcher (27) in den zusaminengeklappten Mittel- und Verschluß-Schenkeln (14-15) formschlüssig durchgreift.

3. Ohrmarke nach Anspruch 1 oder 2,
**dadurch gekennzeichnet**,
daß der Raststift (25) mit dein Befestigungs-Schenkel (16) fest im Bereiche dessen freien Stirnendes (29) verbunden ist.

4. Ohrmarke nach Anspruch 1 oder 2,
**dadurch gekennzeichnet**,
daß der Raststift (25) nach Art eines gesonderten Druckknopfes in miteinander fluchtende Stecklöcher (27) in den zusammengeklappten Schenkeln (15, 16, 17) einrastbar ist.

5. Ohrmarke nach einem der vorangehenden Ansprüche,
**dadurch gekennzeichnet**,
daß ein freiliegender Ausgang eines der Stecklöcher (27) von einer wulstförmigen Erhebung (28) umgeben ist.

6. Ohrmarke nach einem der vorangehenden Ansprüche,
**dadurch gekennzeichnet**,
daß die freiliegende Außenfläche des Befestigungs-Schenkels (16) mit einer Markierungs-Zone (30) ausgestattet ist.

7. Ohrmarke nach einem der vorangehenden Ansprüche,
**dadurch gekennzeichnet**,
daß zwischen der Halterippe (22) und der Biegezone (13.15) des Verschluß-Schenkels (15) eine Vertiefung (19) zur Aufnahme eines Stab-Transponders (18.1) vorgesehen ist.

8. Ohrmarke nach einem der vorangehenden Ansprüche,
**dadurch gekennzeichnet**,
daß vor dem Öffnungsbereich einer bogenförmigen Halterungsrippe (22) einander korrespondierende Vorsprünge und Vertiefungen (23, 24) in den aufeinander zu weisenden Oberflächen der Mittel- und Verschluß-Schenkel (14, 15) vorgesehen sind.

9. Ohrmarke nach einem der Ansprüche 1 bis 6,
**dadurch gekennzeichnet**,
daß in quer zur Längserstreckung aufgeweiteten Bereichen der Mittel- und Verschluß-Schenkel (14-15) koaxial zu den miteinander fluchtenden Stecklöchern (27) ein Scheiben-Transponder (18.2) angeordnet ist.

10. Ohrmarke nach Anspruch 9,
**dadurch gekennzeichnet**,
daß der Scheiben-Transponder (18.2) zwischen der Bogen-Rippe (22) und der benachbarten Biegezone (13.15) diametral eingespannt ist.
